# EUROPÄISCHE PATENTSCHRIFT

(11) **EP 1 657 537 B1**
(45) Veröffentlichungstag und Bekanntmachung des Hinweises auf die Patenterteilung: **03.06.2009**
(21) Anmeldenummer: 05107335.1
(22) Anmeldetag: 10.08.2005
(51) Int. Cl.: G01L 23/14, G01L 9/16, G01L 1/12, F02D 41/38

(54) **Verfahren und Vorrichtung zur Bestimmung des absoluten Drucks in durch Fluid durchströmten Rohren**
Method and device for determining the absolute pressure in a fluid flow conduit
Procédé et dispositif pour la détermination de la pression absolue dans un conduit d'écoulement d'un fluide

(30) Priorität: 01.10.2004 DE 102004047959
(43) Veröffentlichungstag der Anmeldung: 17.05.2006
(73) Patentinhaber: Continental Automotive GmbH, 30165 Hannover (DE)
(72) Erfinder: Baumann, Julian, 76137, Karlsruhe (DE); Göger, Dirk, 76297, Stutensee (DE); Schlegl, Thomas, 93055, Regensburg (DE)

(56) Entgegenhaltungen:
- EP-A- 0 589 517
- WO-A-02/066809
- DE-A1- 3 604 088
- DE-A1- 10 100 957
- DE-C- 906 625
- US-A- 4 010 717
- US-A- 4 408 496
- US-A- 4 524 624
- US-A- 4 541 288
- US-A- 4 561 314
- US-A- 4 621 503
- US-A- 5 007 295
- US-A1- 2003 160 118
- US-A1- 2004 093 951
- US-B1- 6 553 819
- US-B1- 6 561 036

## Beschreibung

Die Erfindung betrifft ein Verfahren zur Bestimmung des Druckes in Rohren gemäß dem unabhängigen Anspruch 1 und betrifft eine entsprechende Vorrichtung gemäß dem unabhängigen Anspruch 7.

Wichtige Ziele bei der Entwicklung von Dieselmotoren sind die Reduktion von Emissionen und die Reduktion des Kraftstoffverbrauchs. Dies versucht man zum einen durch eine erhöhte Präzision bei der Formung des Einspritzverlaufs und zum anderen durch einen homogeneren Verbrennungsprozess im Motor zu erreichen. Deshalb wird neben Veränderungen in der Systemhardware, die unter anderem eine Reduktion der kleinstmöglichen einzuspritzenden Kraftstoffmenge ermöglicht, der Druck in der Kraftstoffeinspritzleitung zunehmend höher gewählt.

Die neuesten Injektorgenerationen ermöglichen Mehrfacheinspritzungen, was zu mehreren Öffnungs- und Schließvorgängen der Injektornadel in sehr kurzen Zeitabständen führt. Diese Nadelbewegungen erzeugen Druckoszillationen in der Einspritzleitung, deren Amplitude eine Abweichung um etwa 10% vom Arbeitspunkt betragen kann. Der genaue zeitliche Verlauf der Druckschwankungen hängt ab vom gewählten Einspritzverlauf, der Injektorcharakteristik, den hydraulischen Eigenschaften der Einspritzleitung und der Hochdruckpumpe sowie von Kraftstoffeigenschaften wie Temperatur und Viskosität. Aufgrund der hohen Anzahl beeinflussender Parameter können die Druckschwankungen derzeit nicht analytisch berechnet werden. Die Druckschwankungen am injektorseitigen Ende der Einspritzleitung beeinflussen die Menge und den zeitlichen Verlauf des eingespritzten Kraftstoffpakets. Eine Messung des Drucks an dieser Stelle erfordert den Einbau eines zusätzlichen Sensors, der die dynamischen Druckschwankungen ausreichend genau erfassen kann. Ein solcher Sensor scheidet aus Kostengründen aus. Da ein solcher Sensor invasiv arbeitet, verändert er darüber hinaus die hydraulischen Eigenschaften der Einspritzleitung.

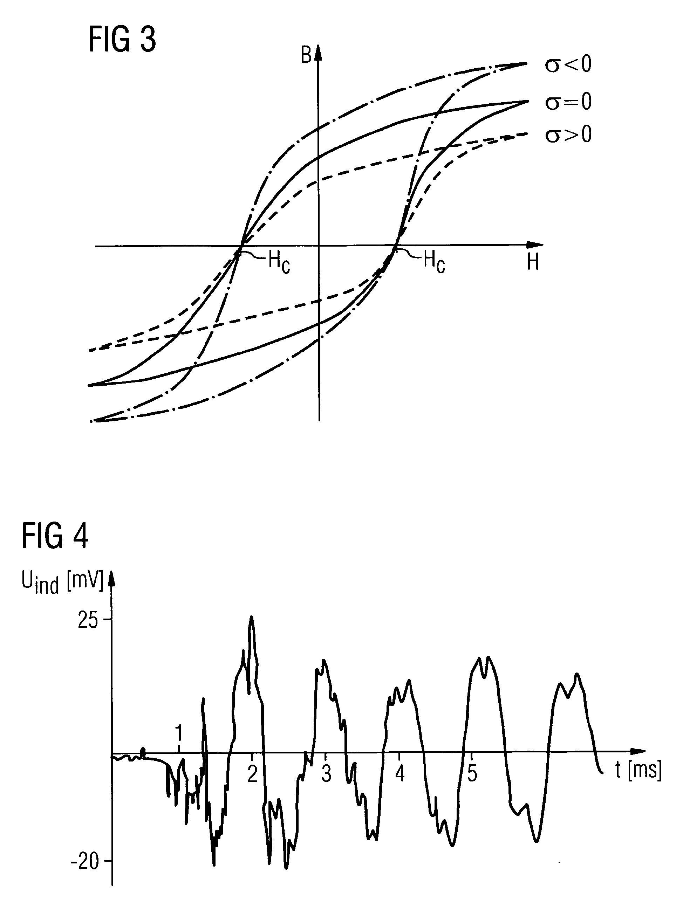

Es sind Sensoren bekannt, die auf dem magneto-elastischen Effekt basieren. Dieser besagt, dass ein ferromagnetisches Material seine magnetischen Eigenschaften ändert, wenn es einer Längenänderung ausgesetzt wird. Das bedeutet, dass die Hysteresekurve, die den nichtlinearen Zusammenhang zwischen dem magnetischen Feld H und der magnetischen Flussdichte B durch die magnetische Permeabilität µᵣ beschreibt, gedehnt oder gestaucht wird (s.Fig.3).

Der unter hohem Druck stehende Kraftstoff erzeugt in der aus ferromagnetischem Material bestehenden Einspritzleitung radiale und axiale Druck- und Zugspannungen. Eine Druckänderung führt daher zu einer Änderung der mechanischen Spannungen im Einspritzleitungsmaterial. Durch den magneto-elastischen Effekt ändert sich dabei die magnetische Permeabilität des Materials µᵣ, was bei konstantem Magnetfeld H zu einer sich näherungsweise proportional zur Druckschwankung ändernden magnetischen Flussdichte B führt. Eine zeitlich veränderliche magnetische Flussdichte B erzeugt nach dem Induktionsgesetz in einer Spule eine induzierte Spannung U_{ind}. Diese Spannung kann gemessen und aus ihr die Druckschwankungen in der Einspritzleitung rekonstruiert werden.

Die Druckschrift DE 101 00 957 A1 offenbart einen aus drei Drahtspulen aufweisenden Sensor, die um eine Einspritzleitung gewickelt werden. Die beiden äußeren Spulen werden von Gleichstrom durchflossen und erzeugen so ein zeitlich konstantes magnetisches Feld H. Die mittlere Spule dient zur Messung der induzierten Spannung. Diese wird von einem nahe am Sensor angeordneten Signalverstärker verstärkt. Zur Abschirmung äußerer magnetischer Felder, die als Störungen auf die induzierte Spannung einwirken, kann der Sensor von einem aus weichmagnetischem Material bestehenden Schirmgehäuse umgeben werden, welches an der Einspritzleitung angebracht wird.

Die Druckschrift DE 197 57 293 A1 beschreibt eine Vorrichtung zur Bestimmung des Einspritzbeginns mittels eines magneto-elastischen Sensors, bei dem unter anderem der relative Druck bestimmt wird.

Bei den bekannten Sensoren ist es dabei nachteilig, dass diese den absoluten Druck innerhalb einer Einspritzleitung nicht bestimmen können.

Somit liegt die Erfindung die Aufgabe zugrunde, eine Vorrichtung und Verfahren vorzustellen, die den absoluten Druck innerhalb eines Fluid durchströmten Rohres ermitteln können.

Die Erfindung wird durch die Merkmale des unabhängigen Anspruchs 1 und des unabhängigen Anspruchs 7 gelöst.

Die Erfindung betrifft ein Verfahren zur Bestimmung des absoluten Druckes in durch Fluid durchströmten Rohren, insbesondere Einspritzleitung von Brennkraftmaschinen. Dabei wird ein erstes Signal eines ersten Drucksensors erfasst. Dieses erste Signal wird integriert. Das integrierte Signal wird mit einem Faktor multipliziert. Abschließend wird dieser multiplizierte Faktor mit einem Arbeitsdruck addiert. Dieses erfindungsgemäße Verfahren bietet die vorteilhafte Möglichkeit den absoluten Druck innerhalb der Einspritzleitung zu erfassen, die den Rail einer Brennkraftmaschine mit dem entsprechenden Injektor verbindet.

Um ein Abdriften des integrierten Wertes zu vermeiden, ist es vorteilhaft, die Integration während einer bestimmten Zeitspanne durchzuführen. Dabei kann der Beginn der Integration mit dem Einspritzbeginn eines entsprechenden Injektors übereinstimmen. Dies kann beispielsweise dadurch erreicht werden, in dem die Flanke des Einsteuerungssignals des Injektors erfasst wird. Eine weitere vorteilhafte Ausgestaltung der Erfindung ist es, dass der Faktor zeitlich veränderlich ist. Dabei kann dieser Faktor vom Raildruck, vom Einspritzverlauf und/ oder vom Rohrmaterial abhängen. Diese zeitliche Abhängigkeit kann beispielsweise durch eine Annäherung eines Polynoms dritter Ordnung erreicht werden.

Weitere vorteilhafte Ausgestaltungen der Erfindung sind in den übrigen abhängigen Ansprüchen angegeben.

Das erfindungsgemäße Verfahren und die erfindungsgemäße Vorrichtung bieten somit die Möglichkeit, den Druck in einer Einspritzleitung nichtinvasiv, d.h. ohne Veränderung der hydraulischen Eigenschaften der Einspritzleitung, zu messen. Aufgrund der einfachen Bauform des Sensors ist er um Größenordnungen billiger herstellbar als konventionelle Drucksensoren. Die bisher mit vergleichbarem Aufwand nicht verfügbare Information über die Druckschwankungen in der Einspritzleitung nahe am Injektor kann zu einer Korrektur des Einspritzverlaufs genutzt werden. Damit kann eine genauere Mengendosierung erreicht werden, wie sie für kommende, strengere E-missionsgesetzgebungen notwendig sein wird. Weiter kann aus der Frequenz der gemessenen Schwingungen bei bekannten Fluideigenschaften des Kraftstoffs auf die Temperatur des Kraftstoffs nahe des Injektors geschlossen werden. Bei Kaltstart kann aus der Frequenzinformation anstatt auf die (zu diesem Zeitpunkt nämlich bekannte) Temperatur auf die Art des Kraftstoffs (Sommer- oder Winterdiesel) geschlossen werden. Weiterhin denkbar sind Diagnosefunktionen zur Überwachung der Injektoren.

Die Erfindung wird nachfolgend unter Bezugnahme auf die schematische Zeichnung beispielhaft erläutert. Dabei zeigt:
- Figur 1, 2: zwei Ausführungsformen eines magneto-elastischen Drucksensors;
- Figur 3: Hysteresekurve eines ferromagnetischen Materials;
- Figur 4: im Drucksensor induzierte Spannung während eines Einspritzvorgangs;
- Figur 5: gefilterte und integrierte induzierte Spannung im Vergleich mit dem Signal eines Referenzsensors;
- Figur 6: skaliertes Signal im Vergleich zum Referenzsignal und
- Figur 7: schematische Darstellung des Algorithmus zur Druckrekonstruktion.

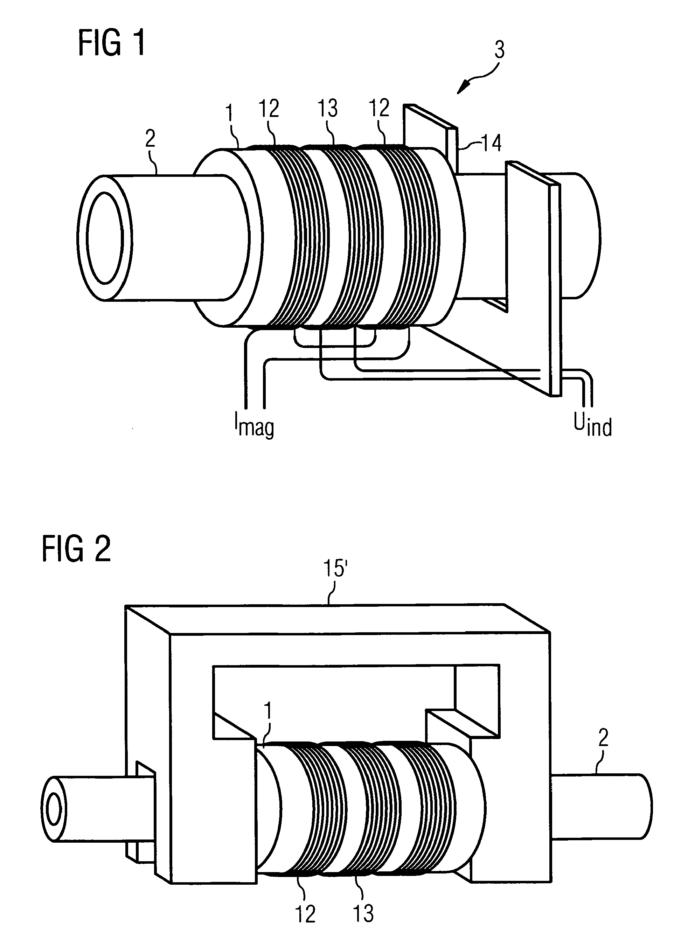

In Figur 1 ist ein erster Drucksensor 3 mit einem Element 1 abgebildet, das als Kern 1 bezeichnet wird. Der Kern 1 ist kraftschlüssig mit einem ferromagnetischem Rohr 2 (Einspritzleitung) verbunden.

Der erste Drucksensor 3 kann zudem eine Vormagnetisierungsspule 12 aufweisen, deren Windungen so gewickelt sind, dass etwa bei der Hälfte der Windungszahl ein Zwischenraum vorhanden ist. Die Vormagnetisierungsspule 12 umgibt den Kern 1 und ist kraftschlüssig damit verbunden.

In diesem Zwischenraum der Vormagnetisierungsspule 12 ist eine Messspule 13 angeordnet, die den Kern 1 kraftschlüssig umgibt. Des Weiteren kann ein Messverstärker 14 derart angeordnet sein, dass er einen möglichst kleinen Abstand zur Messspule 13 aufweist. Durch den möglichst kleinen Abstand des Messverstärkers 14 zur Messspule 13 können Störeinstreuungen vermindert werden und somit ein besseres Signal-RauschVerhältnis erreicht werden. Ein solcher einem Transformator ähnlicher Aufbau mit zwei Wicklungen ist sehr empfindlich, aber nicht notwendig. Eine einzige Wicklung, wie die der Messspule 13, ist ausreichend um den Druck in der Leitung ermitteln zu können. Die Verwendung nur einer Spule (Wicklung) ermöglicht einen einfachen, robusten Aufbau.

Durch den durch die Vormagnetisierungsspule 12 fließenden Magnetisierungsstrom I_{mag} wird ein Magnetfeld erzeugt, mit dem der Kern 1 vormagnetisiert wird.

In diesem Ausführungsbeispiel des ersten Drucksensors, der als Zylindersensor bezeichnet wird, sind die Vormagnetisierungsspule 12 und die Messspule 13 koaxial zum hohlzylinderförmigen Kern 1 und zur Einspritzleitung 2 angeordnet.

Bei einem solchen Zylindersensor ist ein offener magnetischer Kreis vorhanden. Zum Erreichen einer bestimmten magnetischen Flussdichte B ist daher eine größere magnetische Feldstärke H als beim geschlossenen magnetischen Kreis notwendig.

In einem anderen Ausführungsbeispiel (Figur 2) weist der Zylindersensor ein zweites Element 15 auf, dass als Joch 15' bezeichnet wird. Dieses Joch 15'umgibt die Einspritzleitung 2 zumindest teilweise und ist mit den ringförmigen Stirnflächen des zylinderförmigen Kerns 1 mechanisch verbunden.

Durch das Joch 15' werden die aus den Stirnflächen des Kerns 1 austretenden magnetischen Feldlinien geschlossen. Dadurch weist der als Jochsensor bezeichnete Drucksensor einen geschlossenen magnetischen Kreis auf.

Vorteilhaft ist es, für das Material des Jochs 15' Weicheisen oder geschichtetes Trafoblech zu verwenden.

In Figur 3 ist die magnetische Flussdichte B über das magnetische Feld H eines ferromagnetischen Materials abgebildet. Bei unterschiedlichen Belastungen des ferromagnetischen Materials, verändert sich die in Figur 3 abgebildete Hysteresekurve. Steht das Material unter Druckspannung (σ<0), so wird die Hysteresekurve durch den magneto-elastischen Effekt gestaucht (strichpunktiert dargestellt). Steht das Material unter Zugspannung (σ>0), so wird die Hysteresekurve gestreckt (gestrichelt dargestellt). Das mechanisch unbelastete ferromagnetische Material erzeugt die durchgezogen dargestellte Hysteresekurve (σ=0).

Eine Druckänderung in einem Rohr 2 erzeugt eine mechanische Beanspruchung der Rohrwandungen. Der magneto-elastische Effekt erzeugt eine Änderung der magnetischen Permeabilität µᵣ, die ihrerseits wiederum eine Änderung der magnetischen Flussdichte B hervorruft. Gemäß Faradays Gesetz wird Spannung in einer um das Rohr angeordneten Spule induziert, die als Sensorsignal gemessen werden kann. Eine solche induzierte Spannung über die Zeit ist in Figur 4 abgebildet. Dabei ist der in Figur 1 abgebildete Drucksensor 3 in der Nähe eines Injektors einer Brennkraftmaschine angeordnet. Die in Figur 4 gezeigte Kurve gibt die in der Messspule 12 induzierte Spannung während eines Einspritzvorganges wieder.

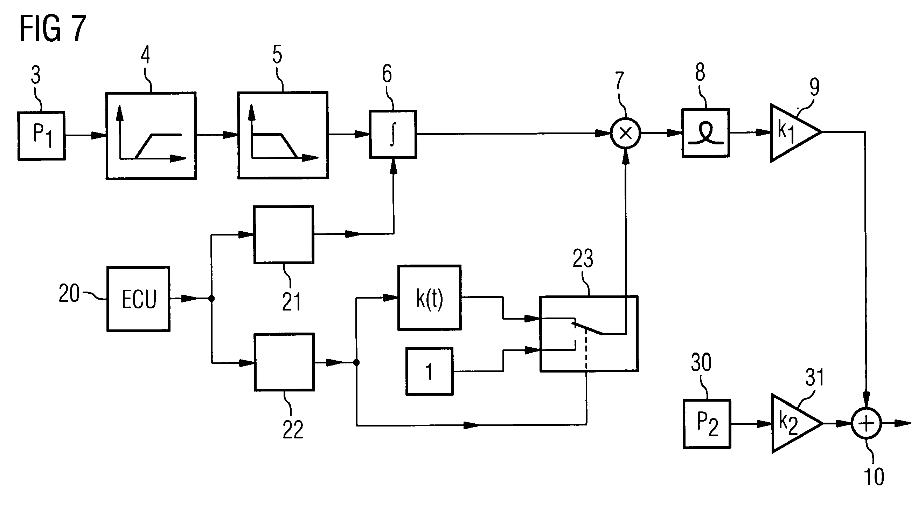

Ein erfindungsgemäßer Schaltungsaufbau ist in Figur 7 wieder gegeben. Der erste Drucksensor 3 ist an einem Hochpassfilter 4 angeschlossen, um Störungen unterhalb einer Frequenz von 500 Hz zu unterdrücken, insbesondere Frequenzen bei 50 Hz und 150 Hz. Der Ausgang des Hochpassfilters 4 ist an dem Eingang eines Tiefpassfilters 5 angeschlossen. Dieser Tiefpassfilter 5 unterdrückt Störungen mit einer Frequenz oberhalb von 1600 Hz, insbesondere bei einer Frequenz um 2700 Hz. Der Ausgang des Tiefpassfilters 5 ist an einem ersten Eingang einer Integrationseinheit 6 angeschlossen. Der Ausgang der Integrationseinheit 6 ist an einem ersten Eingang einer Multiplikationseinheit 7 angeschlossen. Diese Multiplikationseinheit 7 ist ihrerseits an dem Eingang einer Verzögerungseinheit 8 angeschlossen. Diese Verzögerungseinheit 8 ist an einer ersten Skalierungseinheit 9 angeschlossen, die an einem ersten Eingang einer Additionseinheit 10 angeschlossen ist. Der Ausgang der Additionseinheit 10 gibt den absoluten Druck innerhalb der Einspritzleitung 2 wieder.

Beim Einspritzbeginn gibt eine ECU 20 ein Ansteuerungssignal für einen Injektor aus. Dieses Ansteuerungssignal wird in einer Flankendetektionseinheit 21 dazu verwendet, um den Einspritzbeginn des Injektors feststellen zu können. Der Ausgang des Flankendetektors 21 ist am zweiten Eingang der Integrationseinheit 6 angeschlossen, um ein Wegdriften des integrierten Signals zu verhindern. Nach Abklingen der Druckoszillation innerhalb der Einspritzleitung wird die Integration gestoppt.

Ein weiterer Flankendetektor 22 nutzt ebenfalls das Ansteuerungssignal eines Injektors aus um einen zeitlich veränderlichen Faktor k zu verändern. Der Ausgang der Umschalteinheit 23 ist am zweiten Eingang der Multiplikationseinheit 7 angeschlossen.

Ein zweiter Drucksensor 30 in an einer zweiten Skalierungseinheit 31 angeschlossen. Der Ausgang dieser Skalierungseinheit 31 ist an dem zweiten Anschluss der Additionseinheit 10 angeschlossen. Dies dient dazu, den Arbeitsdruck p₀ bei Arbeitsbeginn der Integration zu erfassen. Ein solcher zweiter Drucksensor 30 kann beispielsweise in der Nähe einer Hochdruckpumpe angeschlossen sein oder direkt im Rail vorhanden sein. Aufgrund der Dämpfung der Schwingungen innerhalb des Rails und aufgrund der Trägheit des Sensors können hohe Frequenzen von diesem nicht erfasst werden, so dass der zweite Drucksensor 30 einen Durchschnittsdruck innerhalb des Rails misst.

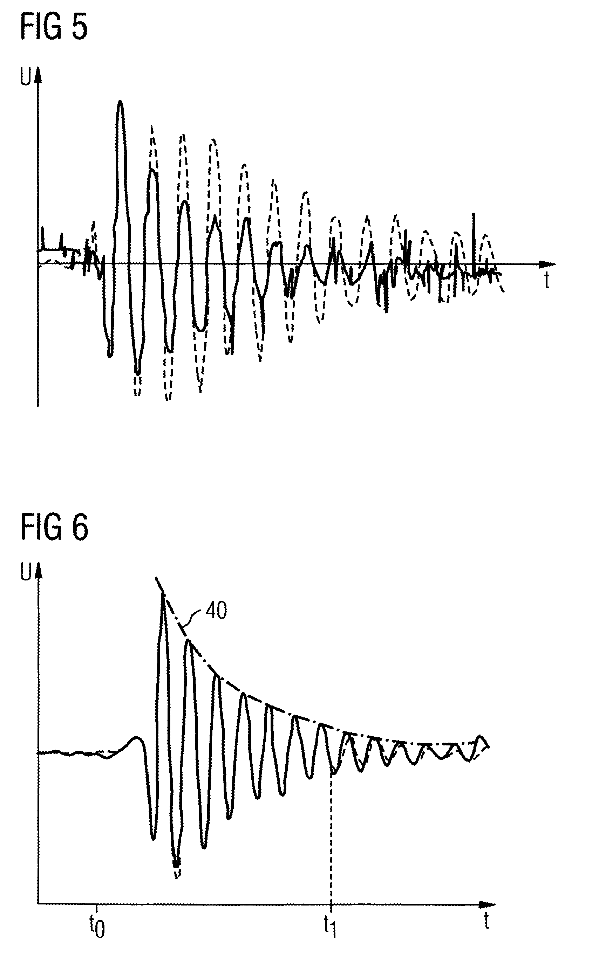

Die in Figur 4 abgebildete Kurve wird durch die beiden Filter 4 und 5 geleitet und anschließend in der Integrationseinheit 6 integriert. Das gefilterte und integrierte Induktionssignal ist als gestrichelt dargestellte Kurve in Figur 5 abgebildet. Die durchgezogene Kurve in Figur 5 gibt ein Referenzsignal wieder. Darin ist zu erkennen, dass das gefilterte und integrierte Signal im Vergleich zum Referenzsignal zwar die gleiche Schwingungsdauer aufweist, aber zu hohe Amplituden aufweist.

In Figur 6 ist das skalierte Messsignal (gestrichelt dargestellt) im Vergleich zum Referenzsignal (durchgezogene Linie) dargestellt. Dieses skalierte Signal wird am Ausgang der Additionseinheit 10 ausgegeben. Zum Zeitpunkt t₀ beginnt die Injektion des Kraftstoffs. Das Ansteuerungssignal des Injektors wird von der Flankendetektionseinheit 21 erkannt und gibt der Integrationseinheit 6 den Start für die Integration an. Bis zum Zeitpunkt t₁ sind zwischen Referenzsignal (durchgezogene Linie) und dem skalierten Signal (gestrichelt dargestellt) kaum Abweichungen erkennbar. Die strichpunktiert eingezeichnete Hüllkurve 40 stellt den zeitlichen veränderlichen Faktor k dar.

Die Hüllkurve 40 kann für jeden ersten Drucksensor mit Hilfe des Referenzsignals (durchgezogene Linie) ermittelt werden. Die individuelle Hüllkurve kann in einem nicht dargestellten Speicher abgelegt werden.

Eine preisgünstigere Alternative ist es beispielsweise nur jeden 30. Drucksensor auszumessen und dessen Hüllkurve zu bestimmen. Diese Hüllkurve wird für die in der Produktion nächsten 29 Drucksensoren verwendet.

Dabei kann es vorkommen, dass die nicht individualisierte Hüllkurve gar nicht zu einem Drucksensor passt.

Für einen solchen Fall ist die Umschalteinheit 23 vorgesehen, um den k-Faktor abzuschalten. Stattdessen wird an die Multiplikationseinheit 7 ein konstanter Faktor (=1) angelegt.

Somit ist es möglich, mit diesem erfindungsgemäßen Verfahren und Vorrichtung den absoluten Druck innerhalb einer Einspritzleitung 2 zu messen.

## Patentansprüche

1. Verfahren zur Bestimmung des absoluten Drucks in durch Fluid durchströmten Rohren, insbesondere Einspritzleitungen von Brennkraftmaschinen, **gekennzeichnet durch** folgende Schritte:
a) Erfassen des ersten Signals eines ersten Drucksensors (3)
b) Integration des ersten Signals
c) Multiplikation des integrierten Wertes mit einem Faktor (k)
d) anschließend Addition eines Arbeitsdruckes (p) zum multiplizierten Wert.

2. Verfahren nach Anspruch 1, **dadurch gekennzeichnet, dass** die Integration nur während einer bestimmten Zeitspanne durchgeführt wird.

3. Verfahren nach Anspruch 2, **dadurch gekennzeichnet, dass** der Beginn der Zeitspanne im Wesentlichen dem Einspritzbeginn eines am Rohrende angeschlossenen Injektors entspricht.

4. Verfahren nach mindestens einem der vorhergehenden Ansprüche, **dadurch gekennzeichnet, dass** der Faktor (k) zeitlich veränderlich ist.

5. Verfahren nach Anspruch 4, **dadurch gekennzeichnet, dass** der zeitlich veränderliche Faktor (k) bei einer Brennkraftmaschine vom Raildruck, vom Einspritzverlauf und/ oder vom Rohrmaterial abhängt.

6. Verfahren nach mindestens einem der vorhergehenden Ansprüche, **dadurch gekennzeichnet, dass**, der Arbeitsdruck (p) mit Hilfe eines zweiten Drucksensors (30) bei einer Brennkraftmaschine in der Nähe einer das Rohr mit Fluid versorgenden Hochdruckpumpe oder an einem Rail erfasst wird.

7. Vorrichtung zur Bestimmung des absoluten Drucks in Fluid durchströmten Rohren, insbesondere Einspritzleitungen von Diesel betriebenen Brennkraftmaschinen, wobei die Vorrichtung umfasst:
- einen ersten Drucksensor (3),
- eine Integrationseinheit (6),
- eine Multiplikationseinheit (7) und
- eine Additionseinheit (10),
wobei der erste Drucksensor (3) an die Integrationseinheit (6) angeschlossen ist, die an die Multiplikationseinheit (7) angeschlossen ist, die an die Additionseinheit (10) angeschlossen ist.

8. Vorrichtung nach Anspruch 7, **dadurch gekennzeichnet, dass** zwischen dem erstem Drucksensor (3) und der Integrationseinheit (6) ein Tiefpassfilter (5) und/ oder Hochpassfilter (4) angeschlossen sind.

9. Vorrichtung nach mindestens einem der Ansprüche 7 und 8, **dadurch gekennzeichnet, dass** eine Ansteuereinheit (20) des Injektors an der Integrationseinheit (6) angeschlossen ist, um den Integrationsbeginn auszulösen.

10. Vorrichtung nach mindestens einem der Ansprüche 7 bis 9, **dadurch gekennzeichnet, dass** die Vorrichtung einen zweiten Drucksensor (30) aufweist, der näher zu einer das Rohr (2) mit Fluid versorgender Hochdruckpumpe angeordnet ist als der erste Drucksensor (3).

11. Vorrichtung nach mindestens einem der Ansprüche 7 bis 10, **dadurch gekennzeichnet, dass** der erste Drucksensor (3) ein um das Rohr angeordneter magneto-elastischer Sensor ist.

12. Vorrichtung nach mindestens einem der Ansprüche 7 bis 11, **dadurch gekennzeichnet, dass** der erste Drucksensor (3) in der Nähe eines Injektors angeordnet ist.

13. Vorrichtung nach Anspruch 12, **dadurch gekennzeichnet, dass** bei einer Brennkraftmaschine mit einem Rail und mindestens einem Injektor der erste Drucksensor (3) zwischen dem Rail und dem Injektor angeordnet ist, so dass der Druck in der den Rail und den Injektor verbindenden Einspritzleitung (2) erfassbar ist.

14. Vorrichtung nach Anspruch 13, **dadurch gekennzeichnet, dass** der zweite Drucksensor (30) am Rail angeordnet ist, so dass der mittlere Raildruck erfassbar ist.

## Claims

1. Method for determining the absolute pressure in pipes, through which there is a fluid flow, in particular injection lines in internal combustion engines, **characterized by** the following steps:
a) Detection of the first signal from a first pressure sensor (3)
b) Integration of the first signal
c) Multiplication of the integrated value by a factor (k)
d) Then addition of an operating pressure (p) to the multiplied value.

2. Method according to claim 1, **characterized in that** integration is only carried out during a specified time period.

3. Method according to claim 2, **characterized in that** the start of the time period corresponds essentially to the start of injection by an injector connected at the end of the pipe.

4. Method according to at least one of the preceding claims, **characterized in that** the factor (k) changes over time.

5. Method according to claim 4, **characterized in that** in an internal combustion engine the factor (k) that changes over time is a function of the rail pressure, the injection pattern and/or the pipe material.

6. Method according to at least one of the preceding claims, **characterized in that** the operating pressure (p) is detected with the aid of a second pressure sensor (30) in an internal combustion engine in proximity to a high-pressure pump supplying the pipe with fluid or on a rail.

7. Device for determining the absolute pressure in pipes, through which there is a fluid flow, in particular injection lines in diesel-operated internal combustion engines, the device comprising:
- a first pressure sensor (3),
- an integration unit (6),
- a multiplication unit (7) and
- an addition unit (10),
the first pressure sensor (3) being connected to the integration unit (6), which is connected to the multiplication unit (7), which is connected to the addition unit (10).

8. Device according to claim 7, **characterized in that** a lowpass filter (5) and/or high-pass filter (4) is/are connected between the first pressure sensor (3) and the integration unit (6).

9. Device according to at least one of claims 7 and 8, **characterized in that** an activation unit (20) of the injector is connected to the integration unit (6) to initiate the start of integration.

10. Device according to at least one of claims 7 to 9, **characterized in that** the device has a second pressure sensor (30), which is arranged closer to a high-pressure pump supplying the pipe (2) with fluid than the first pressure sensor (3).

11. Device according to at least one of claims 7 to 10, **characterized in that** the first pressure sensor (3) is a magneto-elastic sensor arranged round the pipe.

12. Device according to at least one of claims 7 to 11, **characterized in that** the first pressure sensor (3) is arranged in proximity to an injector.

13. Device according to claim 12, **characterized in that** in an internal combustion engine with a rail and at least one injector the first pressure sensor (3) is arranged between the rail and the injector, such that the pressure in the injection line (2) connecting the rail and the injector can be detected.

14. Device according to claim 13, **characterized in that** the second pressure sensor (30) is arranged on the rail, such that the mean rail pressure can be detected.

## Revendications

1. Procédé pour la détermination de la pression absolue dans des conduits d'écoulement de fluide, en particulier dans des canalisations d'injection de moteurs à combustion interne,
**caractérisé en ce qu'**il comporte les opérations suivantes :
a) détection du premier signal d'un premier capteur de pression (3)
b) intégration du premier signal
c) multiplication de la valeur intégrée par un facteur (k)
d) puis sommation d'une pression de travail (p) à la valeur multipliée.

2. Procédé selon la revendication 1, **caractérisé en ce que** l'intégration n'est effectuée que pendant un intervalle de temps prédéterminé.

3. Procédé selon la revendication 2, **caractérisé en ce que** le début de l'intervalle coïncide essentiellement avec le début de l'injection d'un injecteur connecté à l'extrémité du conduit.

4. Procédé selon au moins l'une des revendications précédentes, **caractérisé en ce que** le facteur (k) est variable dans le temps.

5. Procédé selon la revendication 4, **caractérisé en ce que** dans le cas d'un moteur à combustion interne, le facteur (k) variable dans le temps dépend de la pression dans la rampe, du déroulement de l'injection et/ou du matériau du conduit.

6. Procédé selon au moins l'une des revendications précédentes, **caractérisé en ce que** la pression de travail (p) est relevée au moyen d'un deuxième capteur de pression (30), dans le cas d'un moteur à combustion interne, au voisinage d'une pompe à haute pression alimentant le conduit en fluide, ou dans une rampe.

7. Dispositif pour la détermination de la pression absolue dans des conduits d'écoulement de fluide, en particulier dans des canalisations d'injection de moteurs à combustion interne fonctionnant avec du diesel, ce dispositif comprenant :
- un premier capteur de pression (3),
- une unité d'intégration (6),
- une unité de multiplication (7) et
- une unité de sommation (10) et en ce que
le premier capteur de pression (3) est connecté à l'unité d'intégration (6), celle-ci étant connectée à l'unité de multiplication (7) qui, à son tour, est connectée à l'unité de sommation (10).

8. Dispositif selon la revendication 7, **caractérisé en ce qu'**un filtre passe-bas (5) et/ou un filtre passe-haut (4) est/sont connecté(s) entre le premier capteur de pression (3) et l'unité d'intégration (6).

9. Dispositif selon l'une au moins des revendications 7 et 8, **caractérisé en ce qu'**afin de déclencher le début de l'intégration, une unité de commande (20) de l'injecteur est raccordée à l'unité d'intégration (6).

10. Dispositif selon au moins l'une des revendications 7 à 9, **caractérisé en ce qu'**il comprend un deuxième capteur de pression (30) disposé plus près d'une pompe à haute pression alimentant le conduit (2) en fluide que ne l'est le premier capteur de pression (3).

11. Dispositif selon au moins l'une des revendications 7 à 10, **caractérisé en ce que** le premier capteur de pression (3) est un capteur magnéto-élastique disposé autour du conduit.

12. Dispositif selon au moins l'une des revendications 7 à 11, **caractérisé en ce que** le premier capteur de pression (3) est disposé au voisinage d'un injecteur.

13. Dispositif selon la revendication 12, **caractérisé en ce que** dans le cas d'un moteur à combustion interne comprenant une rampe et au moins un injecteur, le premier capteur (3) est disposé entre la rampe et l'injecteur ce qui permet de capter la pression dans la canalisation d'injection (2) reliant la rampe à l'injecteur.

14. Dispositif selon la revendication 13, **caractérisé en ce que** le deuxième capteur de pression (30) est disposé sur la rampe de sorte ce qui permet de mesurer la pression moyenne de la rampe.
